# EUROPÄISCHE PATENTSCHRIFT

(11) **EP 3 174 747 B1**
(45) Veröffentlichungstag und Bekanntmachung des Hinweises auf die Patenterteilung: **23.05.2018**
(21) Anmeldenummer: 15744235.1
(22) Anmeldetag: 30.07.2015
(51) Int. Cl.: B60K 6/365, B60K 6/48, B60K 6/547, F16H 3/72

(54) **GETRIEBEANORDNUNG FÜR EIN HYBRID-KRAFTFAHRZEUG UND HYBRID-KRAFTFAHRZEUG**
TRANSMISSION ARRANGEMENT FOR A HYBRID MOTOR VEHICLE, AND HYBRID MOTOR VEHICLE
ENSEMBLE DE TRANSMISSION DESTINÉ À UN VÉHICULE AUTOMOBILE HYBRIDE ET VÉHICULE AUTOMOBILE HYBRIDE

(30) Priorität: 31.07.2014 DE 102014215092
(43) Veröffentlichungstag der Anmeldung: 07.06.2017
(73) Patentinhaber: Volkswagen Aktiengesellschaft, 38440 Wolfsburg (DE)
(72) Erfinder: MEISSNER, Christian, 38126 Braunschweig (DE); SCHRÖDER, Hendrik, 38173 Sickte (DE); PETERSEN, Rainer, 38444 Wolfsburg (DE); MÖCKEL, Jörg, 38524 Sassenburg (DE)
(86) Internationale Anmeldenummer: PCT/EP2015/067512
(87) Internationale Veröffentlichungsnummer: WO 2016/016371

(56) Entgegenhaltungen:
- EP-A1- 1 657 094
- DE-A1-102008 008 081
- JP-A- 2002 122 191

## Beschreibung

### Gebiet der Erfindung

Die Erfindung bezieht sich auf eine Getriebeanordnung für ein Hybrid-Kraftfahrzeug, umfassend
- eine Verbrennungsmotor-Eingangswelle zur Verbindung der Getriebeanordnung mit einer Verbrennungskraftmaschine des Kraftfahrzeugs,
- eine Elektromotor-Eingangswelle zur Verbindung der Getriebeanordnung mit einer elektrischen Maschine des Kraftfahrzeugs,
- eine Ausgangswelle zur Verbindung der Getriebeanordnung mit einem Abtrieb des Kraftfahrzeugs,
- einen in einem Gehäuse angeordneten Planetensatz mit einer ersten Sonne, einer zweiten Sonne, einem ersten Hohlrad und einem Steg, auf dem ein Satz erster Planeten und ein Satz zweiter Planeten drehbar gelagert sind, wobei die ersten Planeten einerseits mit dem ersten Hohlrad und andererseits mit den zweiten Planeten kämmen, die zweiten Planeten mit der zweiten Sonne kämmen und die erste Sonne über einen Zahneingriffsmechanismus drehmomentübertragend mit den ersten Planeten verbunden ist, sowie
- eine Mehrzahl von Schaltelementen, mittels derer Elemente des Planetensatzes untereinander oder mit dem Gehäuse schaltbar gekoppelt sind.

Die Erfindung bezieht sich weiter auf ein Hybrid-Kraftfahrzeug mit einer solchen Getriebeanordnung.

### Stand der Technik

Derartige Getriebeanordnungen und Hybrid-Kraftfahrzeuge sind bekannt aus der
DE 100 36 966 A1. Diese Druckschrift offenbart eine Getriebeanordnung, die ein als Kegelscheiben-Umschlingungsgetriebe ausgebildetes CVT-Getriebe und einen Ravigneaux-Planetensatz aufweist. Das CVT-Getriebe dient der Einleitung des Antriebsmomentes einer Verbrennungskraftmaschine. Der Ravigneaux-Satz dient der Einleitung des Antriebsmomentes einer elektrischen Maschine sowie der Zusammenführung beider Antriebsmomente zur Erzeugung eines zusammengesetzten Momentes, welches an der Ausgangswelle zur Einleitung in den Abtrieb des Kraftfahrzeugs bereitgestellt wird. Der Ravigneaux-Satz umfasst in üblicher Weise eine erste und eine zweite Sonne, ein Hohlrad und einen Steg, auf dem zwei Sätze von Planeten gelagert sind, nämlich ein Satz als Langplaneten ausgebildeter erster Planeten und ein Satz als Kurzplaneten ausgebildeter zweiter Planeten. Die ersten Planeten (Langplaneten) kämmen einerseits mit dem Hohlrad und andererseits mit der ersten Sonne. Außerdem kämmen sie auch mit den zweiten Planeten, die ihrerseits mit der zweiten Sonne kämmen. Mittels zweier Bremsen sind das Hohlrad und die erste Sonne unabhängig voneinander am Gehäuse festlegbar. mittels zweier Kupplungen sind zum einen das CVT-Getriebe und die Verbrennungsmotor-Eingangswelle und zum anderen die erste und die zweite Sonne schaltbar miteinander gekoppelt.

Im Rahmen der vorliegenden Beschreibung wird der Begriff "verbinden" bzw. "Verbindung" für feste und während des bestimmungsgemäßen Betriebs nicht lösbare, drehmomentübertragende Verbindungen zweier Elemente verwendet. Gelegentlich wird hier eine solche Verbindung zur Betonung ihres festen Charakters auch als "feste Verbindung" bezeichnet, ohne dass dies einen Bedeutungsunterschied zu "Verbindung" gemäß obiger Definition implizieren würde. Dabei muss es sich nicht zwangsläufig um eine direkte Verbindung der beiden Elemente handeln; auch eine dauerhafte, drehmomentübertragende Wirkverbindung mittels eines Zahneingriffsmechanismus, z.B. eine ein oder mehrstufige Zahnradverbindung, soll hier unter dem Begriff verstanden werden. Im Gegensatz dazu wird der Begriff "koppeln" bzw. "Kopplung" in allgemeinerer Weise verwendet und umfasst sowohl die vorgenannten Verbindungen als auch während des bestimmungsgemäßen Betriebes lösbare Kopplungen, wobei letztere im Bedarfsfall jeweils explizit als "schaltbar gekoppelt" bezeichnet werden. In demjenigen Schaltzustand, in dem zwischen zwei "schaltbar gekoppelten" Elementen eine Drehmomentübertragung ermöglicht ist, werden diese Elemente hier als aneinander "angekoppelt" bezeichnet. Im Fall, dass eines dieser Elemente ein nicht-rotierbares Element ist, wird dabei auch der Begriff "festgelegt" verwendet. Der Begriff "Schaltelement" umfasst im Rahmen der vorliegenden Beschreibung sowohl "Bremsen", die jeweils ein drehendes Element mit dem Getriebegehäuse schaltbar koppeln, als auch "Kupplungen", die jeweils zwei relativ zu dem Getriebegehäuse drehende Elemente schaltbar koppeln, als auch komplexere Mechanismen, die allgemein eine Mehrzahl von Elementen in einer Mehrzahl von Schaltzuständen miteinander schaltbar koppeln. Diese Begriffswahl ist als völlig unabhängig von der konstruktiven Ausgestaltung der entsprechenden Elemente zu verstehen. Insbesondere können sowohl die genannten Bremsen als auch die genannten Kupplungen beispielsweise als schaltbare Freiläufe, Lamellenkupplungen, Synchronisierungen oder auf andere Weise form- oder reibschlüssig realisiert sein. Bei den hier verwendeten Begrifflichkeiten "Sonne", "Hohlrad" und "Steg" wird der Fachmann verstehen, dass damit sowohl das jeweilige Planetensatz-Element sowie auch die zugehörige Welle gemeint sein kann, wobei sich die spezielle Bedeutung jeweils aus dem Kontext ergibt.

Mit der in der genannten, Druckschrift offenbarten Getriebeanordnung lassen sich durch unterschiedliche Schaltung der Schaltelemente vier Vorwärts-Betriebszustände realisieren, nämlich für langsame elektrische Fahrt, elektrisch unterstütztes verbrennungsmotorisches Anfahren, elektrisch unterstützte verbrennungsmotorische Normalfahrt und rekuperatives Bremsen. Für den heutzutage möglichen Elektrifizierungsgrad von Hybridfahrzeugen, der beispielsweise grundsätzlich auch schnelles elektrisches Fahren ermöglicht, ist eine solch einfache Getriebestruktur nicht mehr hinreichend.

Weiterhin ist aus der gattungsbildenden JP 2002 122191 A eine Getriebeanordnung für ein Hybrid-Kraftfahrzeug mit einem Planetensatz bekannt, bei dem erste Planeten einerseits mit einem ersten Hohlrad und andererseits mit einen weiteren zweiten Planeten kämmen, die zweiten Planeten mit einer zweiten Sonne kämmen und eine erste Sonne mit den ersten Planeten kämmt. Weiterhin umfasst der Planetensatz dritte Planeten, die einerseits mit einer dritten Sonne und andererseits mit vierten Planeten kämmen und die vierten Planeten ihrerseits mit einem zweiten Hohlrad kämmen. Die beide Hohlräder sind drehfest verbunden und können über eine Bremse an das Gehäuse festgelegt werden. Die Ausganswelle ist mit der zweiten Sonne verbunden, es erfolgt kein Drehmomentabgriff an den Hohlrädern.

### Aufgabenstellung

Es ist die Aufgabe der vorliegenden Erfindung eine komplexe Getriebeanordnung anzugeben, die durch eine Vielzahl einstellbarer Betriebsmodi einen hohen Elektrifizierungsgrad eines Hybridfahrzeugs im Hinblick auf Wirkungsgradmaximierung und Energieeinsparung besser auszunutzen vermag.

### Darlegung der Erfindung

Diese Aufgabe wird in Verbindung mit den Merkmalen des Oberbegriffs von Anspruch 1 dadurch gelöst, dass auf dem Steg ein Satz dritter Planeten und ein Satz vierter Planeten drehbar gelagert sind, wobei die dritten Planeten einerseits mit einer dritten Sonne und andererseits mit den vierten Planeten und die vierten Planeten ihrerseits mit einem zweiten Hohlrad kämmen, wobei jedes der beide Hohlräder über einen eigenen Zahneingriffsmechanismus drehmomentübertragend mit der Ausgangswelle verbunden ist.

Dies ermöglicht ein Hybrid-Kraftfahrzeug mit einer Verbrennungskraftmaschine, einer elektrischen Maschine und einer Getriebeanordnung, mittels derer die Verbrennungskraftmaschine und die elektrische Maschine mit einem Abtrieb des Kraftfahrzeugs gekoppelt sind, welches sich dadurch auszeichnet, dass die Getriebeanordnung als eine erfindungsgemäße Getriebeanordnung ausgebildet ist, deren Verbrennungsmotor-Eingangswelle mit der Verbrennungskraftmaschine, deren Elektromotor-Eingangswelle mit der elektrischen Maschine und deren Ausgangswelle mit dem Abtrieb verbunden ist.

### Bevorzugte Ausführungsformen der Erfindung sind Gegenstand der abhängigen Patentansprüche.

Kern der erfindungsgemäßen Getriebeanordnung ist die Kombination eines klassischen oder eines modifizierten Ravigneaux-Satzes und eines Doppelplanetensatzes auf einem gemeinsamen Steg. Der gemeinsame Steg sowie die drei Sonnen können als Einleitungselemente zur Einleitung der Antriebsmomente der Verbrennungskraftmaschine und/oder der elektrischen Maschine genutzt werden, während die beiden Hohlräder als Ausleitungselemente nutzbar sind, die beide, bevorzugt über unterschiedliche Übersetzungen, mit der Ausgangswelle verbunden sind. Durch geeignete Schaltung, d.h. Kopplung einzelner Elemente untereinander oder ihre Festlegung am Getriebegehäuse, lassen sich bis zu fünf rein elektrische Betriebsmodi, fünf verbrennungsmotorische, elektrisch boostbare Gänge, vier rein verbrennungsmotorische Gänge mit zur Vermeidung von Schleppverlusten abgekoppelter elektrischer Maschine, zwei verbrennungsmotorische Gänge mit mitgeschleppter elektrischer Maschine und zwei stufenlose Betriebsmodi realisieren. Für eine derartige Maximalauslegung ist jedoch der Einsatz eines modifizierten Ravigneaux-Satzes erforderlich. Bei Verwendung eines klassischen Ravigneaux-Satzes lassen sich lediglich bis zu drei elektrische Betriebsmodi, drei verbrennungsmotorische Gänge (elektrisch unterstützt oder mit zur Vermeidung von Schleppverlusten abgekoppelter elektrischer Maschine) und zwei stufenlose Betriebsmodi realisieren.

Bei der oben angesprochenen, bevorzugten Ausführungsform mit modifiziertem Ravigneaux-Satz ist vorgesehen, dass auf dem Steg ein Satz fünfter Planeten drehbar gelagert ist, die einerseits mit der ersten Sonne und andererseits mit den ersten Planeten kämmen. Anders als beim klassischen Ravigneaux-Satz kämmt die erste Sonne hier nicht unmittelbar mit den ersten Planeten (Langplaneten), sondern mit einem zusätzlichen Satz Kurzplaneten, die, ebenso wie die zweiten Planeten (Kurzplaneten), auf demselben Steg gelagert sind und mit den ersten Planeten (Langplaneten) kämmen.

Zur Realisierung der unterschiedlichen Schaltstellungen ist bevorzugt ein erstes Schaltelement vorgesehen, mittels dessen der Steg schaltbar mit der Verbrennungsmotor-Eingangswelle gekoppelt ist. Dieses erste Schaltelement dient allein der wahlweisen An- oder Abkopplung der Verbrennungskraftmaschine, deren Antriebsmoment in angekoppelten Zustand stets über den Steg eingeleitet wird. In allen verbrennungsmotorischen oder hybriden Betriebsmodi ist daher die Verbrennungsmotor-Eingangswelle mittels des ersten Schaltelementes an den Steg angekoppelt; in allen rein elektrischen Betriebsmodi ist die Verbrennungsmotor-Eingangswelle mittels des ersten Schaltelementes vom Steg abgekoppelt.

Weiter ist bevorzugt ein zweites Schaltelement vorgesehen, welches die Elektromotor-Eingangswelle derart schaltbar mit dem Steg, der ersten Sonne und der zweiten Sonne koppelt, sodass wahlweise der Steg, die erste Sonne, die zweite Sonne oder keines der besagten Elemente drehfest an die Elektromotor-Eingangswelle ankoppelbar ist. Eine Aufgabe des zweiten Schaltelementes ist es also, das Moment der elektrischen Maschine entweder am Steg, wo auch das Moment der Verbrennungskraftmaschine eingeleitet wird, oder an der zweiten oder dritten Sonne einzuleiten. Diese Funktionalität kann mit drei separaten, einzeln ansteuerbaren Kupplungen realisiert werden. Da es jedoch zur Realisierung der oben genannten Betriebsmodi nicht erforderlich ist, dass zwei der besagten Elemente gleichzeitig an die Elektromotor-Eingangswelle angekoppelt werden, empfiehlt sich stattdessen ein sequenziell schaltendes, vorzugsweise formschlüssiges Wellen-Schaltelement, welches beispielsweise im Rahmen einer Axialverschiebung einer Hülse drehfeste Ankopplungen zwischen einer inneren und einer äußeren koaxialen Welle schafft.

Bei einer Weiterbildung der Erfindung ist vorgesehen, dass mittels des zweiten Schaltelementes zusätzlich die erste Sonne und die zweite Sonne derart schaltbar mit dem Gehäuse gekoppelt sind, dass wahlweise die erste Sonne, die zweite Sonne oder keines der besagten Elemente an dem Gehäuse festlegbar sind. Diese Funktionalität könnte auch durch zwei separate, einzeln ansteuerbare Bremsen realisiert werden. Da es jedoch zur Realisierung der oben genannten Betriebsmodi nicht erforderlich ist, dass beide genannten Sonnen gleichzeitig am Gehäuse festgelegt werden, erscheint es günstiger, ein sequenziell schaltendes, vorzugsweise formschlüssiges Wellen-Schaltelement zu verwenden. Diese Bremsenfunktionalität kann gemeinsam mit der zuvor erläuterten Kupplungs-Funktionalität in einem komplexen Schaltelement, realisiert sein. Diese Kombinationsmöglichkeit wird insbesondere dadurch befördert, dass die gleichzeitige Ankopplung eines Elementes an die Elektromotor-Eingangswelle und seine Festlegung am Gehäuse zur Realisierung der oben genannten Betriebsmodi nicht erforderlich ist. Entsprechend ist das zweite Schaltelement bevorzugt derart ausgebildet, dass die jeweils drehfest an die Elektromotor-Eingangswelle angekoppelte Sonne nicht am Gehäuse festgelegt ist.

Weiter ist bevorzugt ein drittes Schaltelement vorgesehen, mittels dessen die dritte Sonne derart schaltbar mit dem Steg und dem Gehäuse gekoppelt ist, dass die dritte Sonne wahlweise drehfest an den Steg oder das Gehäuse oder keines der beiden Elemente ankoppelbar ist. Grundsätzlich lässt sich das dritte Schaltelement durch eine Kupplung und eine Bremse realisieren, die separat ausgeführt und einzeln ansteuerbar sind. Da aber auch hier die gleichzeitige Ankopplung der dritten Sonne an den Steg und an das Gehäuse zur Realisierung der oben genannten Betriebsmodi nicht erforderlich ist, wird auch das dritte Schaltelement bevorzugt als sequenziell schaltendes Wellen-Schaltelement ausgebildet.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1a: eine schematische Darstellung eines KFZ-Antriebsstrangs mit erfindungsgemäßer Getriebeanordnung in einer ersten, bevorzugten Ausführungsform,
- Figur 1b: eine schematische Darstellung eines KFZ-Antriebsstrangs mit erfindungsgemäßer Getriebeanordnung in einer alternativen Variante der ersten, bevorzugten Ausführungsform,
- Figur 2: zwei mögliche Schaltstellungen des ersten Schaltelementes der Getriebeanordnung von Figur 1,
- Figur 3: sechs mögliche Schaltstellungen des ersten Schaltelementes der Getriebeanordnung von Figur 1,
- Figur 4: drei mögliche Schaltstellungen des ersten Schaltelementes der Getriebeanordnung von Figur 1,
- Figur 5: ein vereinfachtes Zustandsschema der mit der Getriebeanordnung von Figuren 1a, 1b realisierbaren Betriebsmodi,
- Figur 6: eine schematische Darstellung eines KFZ-Antriebsstrangs mit erfindungsgemäßer Getriebeanordnung in einer zweiten Ausführungsform.

### Ausführliche Beschreibung bevorzugter Ausführungsformen

Gleiche Bezugszeichen in den Figuren weisen auf gleiche oder analoge Elemente hin.

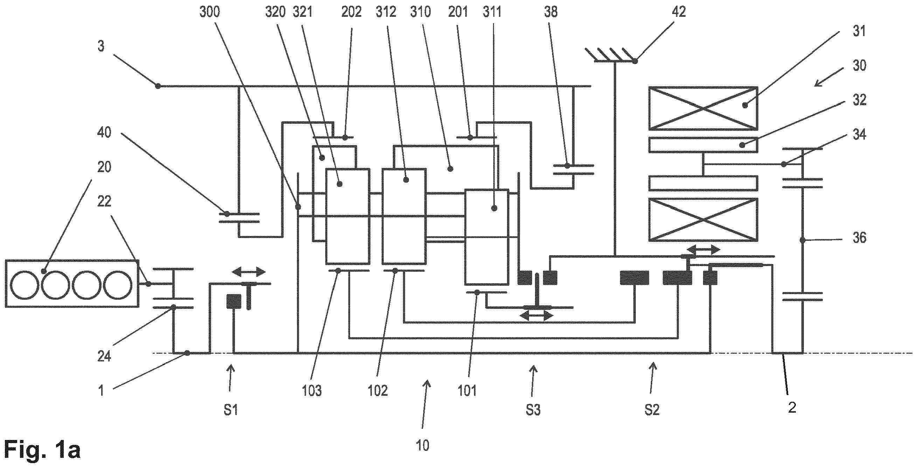

Figur 1a zeigt eine schematische Darstellung eines KFZ-Antreibsstrangs mit einer erfindungsgemäßen Getriebeanordnung 10 in einer ersten, bevorzugten Ausführungsform. Der Antriebsstrangs weist zwei Antriebsaggregate auf. Ein erstes Antriebsaggregat 20 ist als Verbrennungskraftmaschine ausgebildet, die mit Ihrer Kurbelwelle 22 über eine Stirnradstufe 24 mit der Verbrennungsmotor-Eingangswelle der Getriebeanordnung 10 verbunden ist. Der Fachmann wird verstehen, dass die dargestellte Verbindung über eine einfache Stirnradstufe rein beispielhaft ist und für die vorliegende Erfindung nicht von wesentlicher Bedeutung.

Ein zweites Antriebsaggregat 30 ist als elektrische Maschine ausgebildet, die sowohl motorisch als auch generatorisch betreibbar ist. Bei der gezeigten Ausführungsform weist die elektrische Maschine 30 einen außen liegenden Stator 31 und einen innen liegenden, relativ zum Stator 31 rotierbaren Rotor 32 auf. Dessen Rotorwelle 34 ist über eine doppelte Stirnradstufe 36 mit der Elektromotor-Eingangswelle 2 der Getriebeanordnung 10 verbunden. Der Fachmann wird verstehen, dass die Verbindung der elektrischen Maschine 30 über die doppelte Stirnradstufe 36 rein beispielhaft ist und für die vorliegende Erfindung nicht von wesentlicher Bedeutung.

Das Herzstück der Getriebeanordnung 10 wird von einem komplexen Planetensatz gebildet. Dieser weist drei Sonnen auf, nämlich eine erste Sonne 101, eine zweite Sonne 102 und eine dritte Sonne 103. Der Planetensatz weist weiter zwei Hohlräder auf, nämlich ein erstes Hohlrad 201 und ein zweites Hohlrad 202. Weiter weist der Planetensatz einen Steg 300 auf, auf dem im dargestellten Beispiel 5 Sätze von Planeten gelagert sind. Die Planeten eines Satzes erster Planeten 310 sind als Langplaneten ausgebildet und kämmen einerseits mit der dem ersten Hohlrad 201 und andererseits mit einem Satz zweiter Planeten 312, die als Kurzplaneten ausgebildet und auf demselben Steg 300 gelagert sind. Die zweiten Planeten 312 kämmen ihrerseits mit der zweiten Sonne 102. Außerdem kämmt der Satz der erster Planeten 310 mit einem Satz fünfter Planeten 311, die ebenfalls als Kurzplaneten ausgebildet und auf demselben Steg 300 gelagert sind. Die fünften Planeten 311 kämmen ihrerseits mit der ersten Sonne 101. Die ersten Planeten 310, die zweiten Planeten 312 und die fünften Planeten 311 bilden gemeinsam mit den ihnen zugeordneten Sonnen 101, 102 und dem ersten Hohlrad 201 einen Teilsatz des komplexen Planetensatzes, der seiner Ausgestaltung entsprechend als modifizierter Ravigneaux-Satz beschrieben werden kann.

Der komplexe Planetensatz umfasst einen weiteren Teilsatz, der als Doppelplanetensatz ausgebildet ist. Hierzu ist auf dem Steg 300 ein Satz vierter Planeten 320 gelagert, die einerseits mit dem zweiten Hohlrad 202 und andererseits mit einem Satz dritter Planeten 321 kämmen, die ebenfalls auf demselben Steg 300 gelagert sind. Die dritten Planeten 321 kämmen ihrerseits mit der dritten Sonne 103.

Die beiden Hohlräder 201, 202 sind über je eine zugeordnete Stirnradstufe 38, 40 mit der Ausgangswelle 3 der Getriebeanordnung 10 verbunden. Der Fachmann wird erkennen, dass die Ausgestaltung dieser Verbindung als jeweils einfache Stirnradstufe rein beispielhaft ist und für die vorliegende Erfindung nicht von wesentlicher Bedeutung. Beachtenswert ist jedoch, dass die Anbindungen der beiden Hohlräder 201, 202 an die Ausgangswelle 3 mit unterschiedlicher Übersetzung erfolgt.

Weiter umfasst die erfindungsgemäße Getriebeanordnung drei Schaltelemente, nämlich ein erstes Schaltelement S1, ein zweites Schaltelement S2 und ein drittes Schaltelement S3.

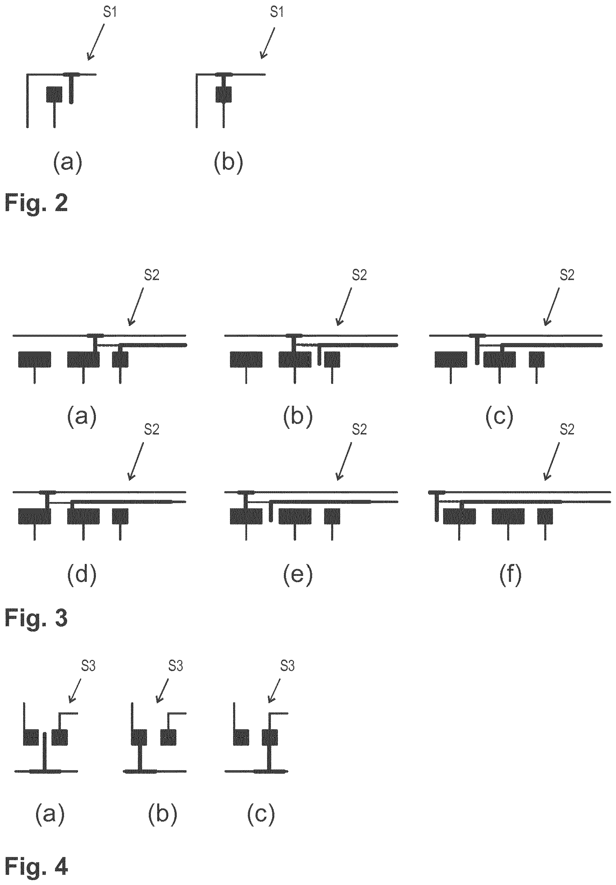

Das erste Schaltelement S1 koppelt den Steg 300 schaltbar mit der Verbrennungsmotor-Eingangswelle 1. Figur 2 zeigt zwei mögliche Schaltstellungen (a) und (b), die das erste Schaltelement S1 einnehmen kann. In der Schaltstellung (a) ist die Verbrennungsmotor-Eingangswelle 1 von allen übrigen Elementen der Getriebeanordnung 10 abgekoppelt. Daher kann in dieser Schaltstellung kein Antriebsmoment der Verbrennungskraftmaschine 20 in die Getriebeanordnung 10 eingeleitet werden. In der Schaltstellung (b) kann hingegen ein Antriebsmoment der Verbrennungskraftmaschine 20 über das geschlossene Schaltelement S1 und den Steg 300 in die Getriebeanordnung 10 eingeleitet werden.

Das zweite Schaltelement S2 ist recht komplex aufgebaut und kann, wie in Figur 3 gezeigt, sechs unterschiedliche Schaltstellungen einnehmen. In einer ersten Schaltstellung (a) ist die dritte Sonne 103 am Getriebegehäuse 42 festgelegt. Zudem ist in dieser Schaltstellung der Steg 300 an die Elektromotor-Eingangswelle 2 angekoppelt. Daher kann in dieser Schaltstellung ein Antriebsmoment der elektrischen Maschine 30 über den Steg 300 in die Getriebeanordnung 10 eingeleitet bzw. ein Moment von der elektrischen Maschine 30 abgestützt werden, während die dritte Sonne 103 keine Rotationsbewegung durchführen kann. Die zweite Schaltstellung (b) unterscheidet sich von der ersten lediglich dadurch, dass die Elektromotor-Eingangswelle 2 von den übrigen Komponenten der Getriebeanordnung 10 abgekoppelt ist. Entsprechend ist eine Momenteneinleitung von der elektrischen Maschine 30 oder einer Momentenabstützung durch diese in dieser Schaltstellung nicht möglich. In der dritten Schaltstellung (c) ist die Elektromotor-Eingangswelle 2 an die dritte Sonne 103 angekoppelt. Entsprechend kann ein Antriebsmoment der elektrischen Maschine 30 in dieser Schaltstellung über die dritte Sonne 103 in die Getriebeanordnung 10 eingetragen bzw. ein Moment abgestützt werden. Die vierte Schaltstellung (d) unterscheidet sich von der dritten Schaltstellung (c) dadurch, dass zusätzlich die zweite Sonne 102 am Getriebegehäuse festgelegt ist. In der fünften Schaltstellung (e) ist bei weiterhin festgelegter zweiter Sonne 102 die Elektromotor-Eingangswelle 2 von den übrigen Komponenten der Getriebeanordnung 10 abgekoppelt, sodass keine Abstützung oder Eintragung eines Momentes möglich ist. In der sechsten Schaltstellung (f) schließlich ist die Elektromotor-Eingangswelle 2 an die zweite Sonne 102 angekoppelt, sodass ein Moment der elektrischen Maschine 30 über die zweite Sonne 102 in die Getriebeanordnung 30 eingetragen bzw. ein Moment abgestützt werden kann.

Das dritte Schaltelement S3 ist ausgelegt, wahlweise die erste Sonne 101 an den Steg 300 anzukoppeln oder am Gehäuse 42 festzulegen, wobei zusätzlich eine Neutralstellung vorgehen ist, in der keine der vorgenannten Ankopplungen realisiert ist. Figur 4 zeigt die Neutralstellung als erste Stellung (a), die Ankopplung der erste Sonne 101 an den Steg 300 als zweite Schaltstellung (b) und die Festlegung der ersten Sonne 101 am Getriebegehäuse 42 als dritte Schaltstellung (c).

Nachfolgend sollen verschiedene mit dem erfindungsgemäßen Antriebsstrang durch unterschiedliche Schaltstellungs-Konstellationen der drei Schaltelemente S1, S2, S3 realisierbare Betriebsmodi erläutert werden.

In einem ersten elektrischen Modus, der vorzugsweise zum Anfahren genutzt wird, befinden sich das erste Schaltelemente S1 in seiner Schaltstellung (a), das zweite Schaltelemente S2 in seiner Schaltstellung (a) und das dritte Schaltelement S3 in seiner Schaltstellung (a). Der Momentenfluss läuft von der elektrischen Maschine über den Steg 300 und das zweite Hohlrad 202 zur Ausgangswelle 3. Gleichzeitig erfolgt eine Momentenabstützung zum Getriebegehäuse 42 über die dritte Sonne 103.

Mit einem einzigen Schaltvorgang, der das erste Schaltelement S1 von seiner Schaltstellung (a) in seine Schaltstellung (b) überführt, kann in einen verbrennungsmotorischen ersten Gang umgeschaltet werden, der bedarfsweise elektrisch unterstützt werden kann (boosten). Die Momente beider Antriebsaggregate addieren sich im Steg 300.

Durch eine weitere einfache Schaltung, nämlich dem Übergang des zweiten Schaltelementes S2 von seiner Schaltstellung (a) in seine Schaltstellung (b) kann in einen rein verbrennungsmotorischen Betrieb mit gleicher Übersetzung (erster Gang) übergegangen werden, wobei die elektrische Maschine 30 zur Vermeidung von Schleppverlusten vollständig abgekoppelt ist.

Durch eine weitere einfache Schaltung, nämlich dem Übergang des zweiten Schaltelementes S2 von seiner Schaltstellung (b) in seine Schaltstellung (c) kann in einen ersten stufenlosen Betriebsmodus übergegangen werden. Die Momentenabstützung über die dritte Sonne 103 erfolgt hierbei nicht gegen das Gehäuse 42, sondern gegen die elektrische Maschine 30, die durch Wechsel zwischen motorischen und generatorischen bzw. Änderung der Drehzahl und Drehrichtung dabei die an der Ausgangswelle 3 ankommende Drehzahl weitgehend unabhängig von der Eingangsdrehzahl der Verbrennungskraftmaschine 20 vorgibt. Entsprechend kann die Verbrennungskraftmaschine in diesem Betriebsmodus fahrgeschwindigkeitsunabhängig in ihrem optimalen Arbeitspunkt betrieben werden.

Durch eine weitere einfache Schaltung, nämlich einem Übergang des zweiten Schaltelementes S2 von seiner Schaltstellung (c) in seine Schaltstellung (d) kann in einen zweiten verbrennungsmotorischen und boostbaren Gang umgeschaltet werden. Das Moment der Verbrennungskraftmaschine wird hierbei wiederum über den Steg 300 ein- jedoch über das erste Hohlrad 201 an die Ausgangswelle 3 ausgeleitet. Das Moment der elektrischen Maschine 30 wird über die dritte Sonne 103 und das zweite Hohlrad 202 an die Ausgangswelle 3 geleitet. Eine Momentenabstützung gegen das Gehäuse 42 erfolgt in dieser Schaltstellung über die zweite Sonne 102.

Durch eine weitere einfache Schaltung, nämlich einem Übergang des zweiten Schaltelementes S2 von seiner Schaltstellung (d) in seine Schaltstellung (e) kann unter Beibehaltung des verbrennungsmotorischen Momentenflusses und der Momentenabstützung durch Abkopplung der elektrischen Maschine 30 (zur Vermeidung von Schleppverlusten) in einen rein verbrennungsmotorischen Betrieb gleicher Übersetzung übergegangen werden.

Durch eine weitere einfache Schaltung, nämlich einen Übergang des zweiten Schaltelementes S2 von seiner Schaltstellung (e) in seine Schaltstellung (f) kann in einen zweiten stufenlosen Betriebsmodus übergegangen werden. Die Momentenabstützung über die zweite Sonne 102 erfolgt dabei nicht gegen das Gehäuse 42, sondern gegen die elektrische Maschine 30, durch deren geeignete Ansteuerung hinsichtlich Drehzahl, Drehrichtung und generatorischen bzw. motorischen Betriebsmodus die an der Ausgangswelle 3 ankommende Drehzahl weitgehen unabhängig von der Eingangsdrehzahl der Verbrennungskraftmaschine 20 vorgegeben wird. Die Verbrennungskraftmaschine 20 kann daher in diesem Betriebsmodus weitgehend fahrgeschwindigkeitsunabhängig in ihrem optimalem Arbeitspunkt betrieben werden.

Durch eine weitere einfache Schaltung, nämlich einen Übergang des dritten Schaltelementes S3 von seiner Schaltstellung (a) in seine Schaltstellung (c) kann in einen dritten verbrennungsmotorischen, elektrisch boostbaren Gang übergegangen werden. Dies geschieht dadurch, dass eine Momentenabstützung über die erste Sonne 101 gegen das Gehäuse 42 angeboten wird, sodass das verbrennungsmotorische und das elektrische Antriebsmoment additiv über das erste Hohlrad 201 an die Ausgangswelle 3 geleitet werden können.

Alternativ kann, ausgehend von dem zweiten stufenlosen Betriebsmodus, durch eine andere einfache Schaltung, nämlich ein Übergang des dritten Schaltelementes S3 von seiner Schaltstellung (a) in seine Schaltstellung (b) in einen vierten verbrennungsmotorischen, elektrisch boostbaren Gang umgeschaltet werden. Die Momentenabstützung erfolgt hierdurch Verblockung des modifizierten Ravigneaux-Teilsatzes, während verbrennungsmotorisches und elektrisches Moment über das erste Hohlrad 201 an die Ausgangswelle 3 geleitet werden.

Durch eine weitere einfache Schaltung, nämlich einem Übergang des ersten Schaltelementes S1 von seiner Schaltstellung (b) in seine Schaltstellung (a) kann in einen weiteren, rein elektrischen Betriebsmodus für hohe Geschwindigkeiten übergegangen werden. Die Verbrennungskraftmaschine 20 wird durch diese Schaltung vollständig abgekoppelt. Allein das Moment der elektrischen Maschine wird über die zweite Sonne 102 und das erste Hohlrad 201 bei verblocktem Ravigneaux-Teilsatz an die Ausgangswelle 3 geleitet.

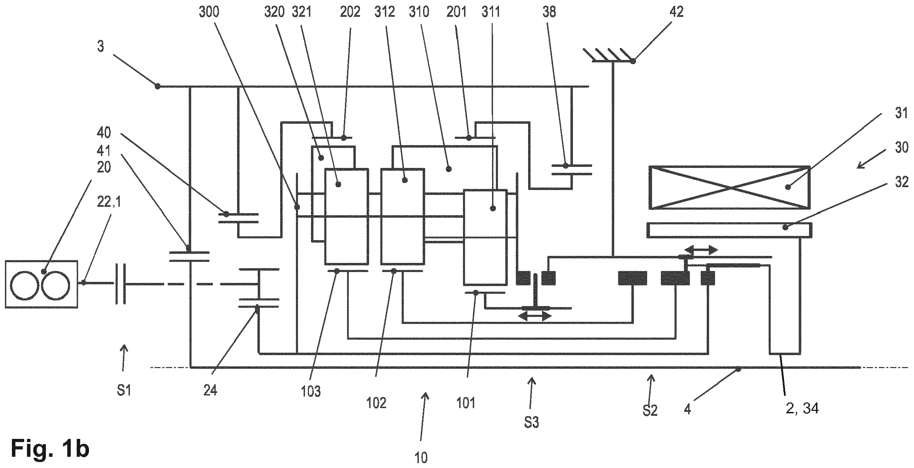

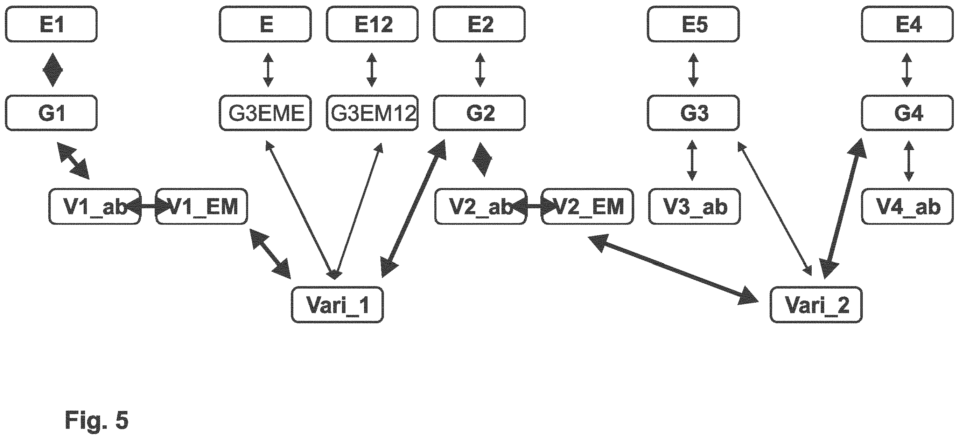

Die oben beschriebenen Schaltvorgänge geben den bevorzugten Schaltpfad während einer Volllastbeschleunigung wieder. Dieser ist in der Darstellung von Figur 5 **ausgezogen** dargestellt. In dem vereinfachten Zustandsschema von Figur 5 sind die mit der Getriebeanordnung von Figur 1a, 1b realisierbaren Betriebsmodi dargestellt, wobei ein einfacher Doppelpfeil zwischen zwei Zuständen darauf hindeutet, dass der entsprechende Übergang mit einer einfachen Schaltung nur eines der Schaltelemente S1, S2 oder S3 realisierbar ist. In den in Figur 5 für die einzelnen Zustände verwendeten Abkürzungen bedeuten "E" elektrisch, "G" verbrennungs-/elektromotorisch gekoppelt, "Vx_ab" verbrennungsmotorisch mit abgekoppelter elektrischer Maschine, "Vx_EM" verbrennungsmotorisch mit mitgeschleppter elektrischer Maschine und "Vari" stufenloser Betriebsmodus.

Der Fachmann wird sich anhand der dargestellten Schaltstellungen der Figuren 2 bis 4 die notwendigen Schaltvorgänge zur Realisierung der in Figur 5 gezeigten Betriebszustände ohne weiteres erschließen können.

Die Fig. 1b zeigt eine alternative Variante der ersten Ausführungsform . Der Rotor 32 der elektrischen Maschine 30 ist koaxial mit der Elektromotor-Eingangswelle 2 bzw. mit den Sonnen 101, 102, 103 angeordnet und ist ohne einer Zwischenübersetzung mit der Elektromotor-Eingangswelle 2 verbunden. Solche koaxiale Anordnung ermöglicht eine platzsparende Verwendung einer elektrischen Maschine mit größerem Durchmesser.

Unterschiedlich zu der Fig. 1a ist das erste Schaltelement nicht zwischen der Stirnradstufe 24 und dem Steg 300 angeordnet, sondern zwischen der Verbrennungskraftmaschine 20 und der Stirnradstufe 24, koaxial mit der Kurbelwelle 22. Dank dieser Anordnung des ersten Schaltelements an der Verbrennungskraftmaschine 20, kann dieses vorteilhaft als ein kraftschlüssiges Schaltelement ausgeführt werden, insbesondere eine konventionelle Reibkupplung. Somit ist z. B. ein Anschleppen der Verbrennungskraftmaschine 20 während der Fahrt möglich.

Weiterhin umfasst diese alternative Variante eine zusätzliche Nebenausgangswelle 4, die koaxial mit den Sonnen 101, 102, 103 angeordnet ist und das gesamte Planetenradsatz bzw. die Getriebeanordnung 10 durchsetzt. An einem vorteilhafterweise dem der Verbrennungskraftmaschine 20 zugewandten Ende ist die Nebenausgangswelle 4 über eine Stirnradstufe 41 mit der Ausgangswelle 3 verbunden. An dem anderen Ende, das der elektrischen Maschine 30 zugewandt ist, erfolgt eine Drehmomentabngabe/abnahme zu einer weiteren angetriebenen Fahrzeugachse, insbesondere der Hinterachse, oder zu einem weiteren Aggregat des Kraftfahrzeugs (einer weiteren elektrischen Maschine, einem Retarder usw.). Somit kann das Fahrzeug mit wenigstens zwei angetriebenen Achsen realisiert werden. Die Ausgangswelle 3 kann insbesondere mit den Vorderachse verbunden werden, wobei in einer vorteilhaften Variante ist die Getriebeanordnung 10 samt der Verbrennungskraftmaschine 20 längs vorne im Kraftfahrzeug montiert - die Ausgangswelle 3 kann dann an dem der Verbrennungskraftmaschine 20 zugewandten Ende ein Kegelritzel zum Antrieb des vorderen Ausgleichsgetriebes aufweisen,

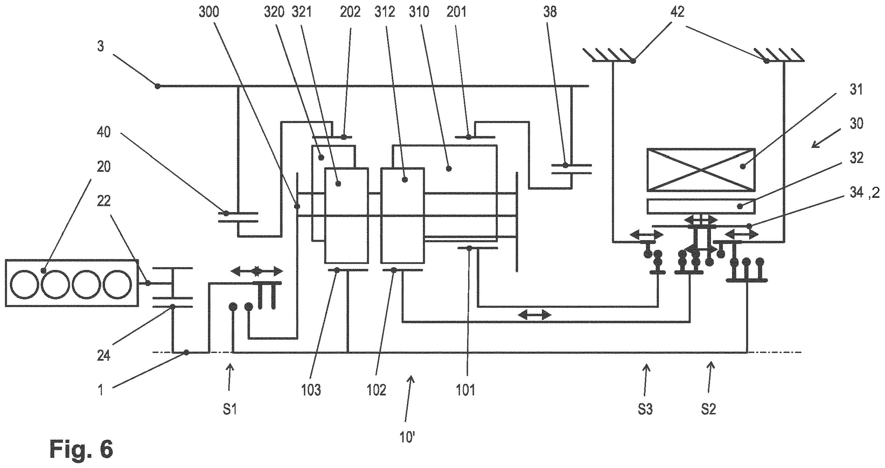

Alle diese alternative Einzelheiten der Anordnung nach der Fig. 1b können auch einzeln in die Anordnung nach der Fig. 1a bzw. Fig. 6 implementiert werden.

Figur 6 schließlich stellt einen Antriebsstrang mit einer leicht modifizierten Getriebeanordnung 10' dar. Im Unterschied zu der Getriebeanordnung 10 von Figur 1a weist die modifizierte Getriebeanordnung 10' einen reinen Ravigneaux-Teilsatz auf. D.h. bei ihr kämmen die ersten Planeten 310 nicht mit fünften Planeten 311, sondern direkt mit der ersten Sonne 101.

Entsprechend sind auch die Schaltelemente S1, S2 und S3 geringfügig modifiziert, wobei sich der Fachmann die einzelnen Stellungen und resultierenden Betriebsmodi im Lichte der obigen Erläuterungen zu Figur 1a bis 4 leicht herleiten kann. Bei dieser Ausführungsform lassen sich bis zu drei elektrische Betriebsmodi, vier verbrennungsmotorische Gänge und zwei stufenlose Betriebsmodi realisieren.

Es werden nur Unterschiede gegen die erste Ausführungsform näher erläutert werden. Die elektrische Maschine 30 ist koaxial mit der Getriebeanordnung 10' angeordnet und die Rotorwelle 34 ist koaxial mit dem Planetensatz. Das erste Schaltelement S1 koppelt schaltbar die Verbrennungsmotor-Eingangswelle 1 mit dem Steg 300 und hat eine dritte zusätzliche Stellung, in der es zu diesen Elementen noch die dritte Sonne 103 drehfest koppelt und dadurch den Planetensatz blockiert. Somit wird der vierte verbrennungsmotorische Gang realisiert. Das zweite Schaltelement S2 ist in zwei radialen Ebenen angeordnet und ist in zwei Teile geteilt, die gegeneinander relativ drehbar sind aber axial verbunden sind, sodass sie sich miteinander verschieben. Das erste Teil des Schaltelements S2 kann die Elektromotor-Eingangswelle 2 derart schaltbar mit der ersten Sonne 101, der zweiten Sonne 102 und der dritten Sonne 103 koppeln, dass wahlweise die erste Sonne 101, die zweite Sonne 102, die dritte Sonne 103 oder keines der besagten Elemente drehfest an die Elektromotor-Eingangswelle 2 gekoppelt ist. Mittels des zweiten Teils des zweiten Schaltelementes S2 kann die zweite Sonne 102, die dritte Sonne 103 oder keine davon an das Getriebegehäuse 42 festgelegt werden.

Das dritte Schaltelement legt schaltbar die erste Sonne an das Getriebegehäuse 42 fest.

In einem ersten elektrischen Modus befindet sich das zweite Schaltelement S2 in seiner linken Endstellung und koppelt die Elektromotor-Eingangswelle 2 mit der ersten Sonne 101 und gleichzeitig legt die zweite Sonne 102 an das Getriebegehäuse 42 fest. Das dritte Schaltelement S3 ist geöffnet.

In einem zweiten elektrischen Modus koppelt das zweite Schaltelement S2 die Elektromotor-Eingangswelle 2 mit der zweiten Sonne 102 und gleichzeitig legt die dritte Sonne 103 an das Getriebegehäuse 42 fest. Das dritte Schaltelement S3 ist geöffnet. Diese Stellungen der Schaltelemente wird auf der Fig. 6 gezeigt.

In einem dritten, bevorzugten, elektrischen Modus koppelt das zweite Schaltelement S2 die Elektromotor-Eingangswelle 2 mit der zweiten Sonne 102. Das dritte Schaltelement S3 legt die erste Sonne 101 an das Getriebegehäuse 42 fest.

Das erste Schaltelement ist S1 in allen elektrischen Modi geöffnet, in beiden stufenlosen Modi und der ersten drei verbrennungsmotorischen Modi koppelt es die Verbrennungsmotor-Eingangswelle 1 mit dem Steg 300 und in dem vierten verbrennungsmotorischen Modus koppelt noch die dritte Sonne 103 zu diesen zwei Elementen.

Der erste und zweite verbrennungsmotorische Modus unterscheiden sich von dem ersten und zweiten elektrischen Modus im Prinzip durch das Verbinden der Verbrennungsmotor-Eingangswelle 1 an den Steg 300 mittels des ersten Schaltelementes S1. Der Verbrennungsmotor 20 kann in beide diese Modi mittels der E-Maschine 30 unterstützt werden.

In einem ersten stufenlosen Modus koppelt das zweite Schaltelement S2 die Elektromotor-Eingangswelle 2 mit der zweiten Sonne 102 und in einem zweiten stufenlosen Modus mit der dritten Sonne 103.

In einem dritten verbrennungsmotorischen Modus koppelt das zweite Schaltelement S2 die Elektromotor-Eingangswelle 2 mit der dritten Sonne 103 und das dritte Schaltelement S3 legt die erste Sonne 1 an dem Getriebegehäuse 42 fest.

Ein vierter verbrennungsmotorischen Modus unterscheidet sich von dem dritten verbrennungsmotorischen Modus lediglich durch andere Stellung des ersten Schaltelementes S1, das den Planetensatz blockiert.

Bei allen elektrischen Modi, dem ersten verbrennungsmotorischen und dem ersten stufenlosen Modus läuft der Drehmomentfluss zu der Ausgangswelle 3 über das erste Hohlrad 201, bei dem zweiten stufenlosen Modus und zweiten bis vierten verbrennungsmotorischen Modi dagegen über das zweite Hohlrad 202.

Im Gegensatz zu der ersten Ausführungsform kann bei der Anordnung nach der Fig. 6 die elektrische Maschine in dem dritten und vierten verbrennungsmotorischen Modus nicht abgekoppelt werden. In dem ersten und zweiten verbrennungsmotorischen Modus ist ihre Abkopplung durch Verschiebung des zweiten Schaltelementes S2 aus dem Eingriff mit der ersten bzw. zweiten Sonne 101, 102 möglich, wobei die Festlegung der zweiten bzw. dritten Sonne 102, 103 beibehalten ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Beispielsweise können die beschriebenen Schaltelemente auch als Konstellationen separater, unabhängig schaltbarer Bremsen und/oder Kupplungen ausgebildet sein.

### Bezugszeichenliste

- 1: Verbrennungsmotor-Eingangswelle
- 2: Elektromotor-Eingangswelle
- 3: Ausgangswelle
- 4: Nebenausgangswelle
- 10: Getriebeanordnung
- 10': Getriebeanordnung
- 20: Verbrennungskraftmaschine
- 22: Kurbelwelle
- 24: Stirnradstufe
- 30: elektrische Maschine
- 31: Stator
- 32: Rotor
- 34: Rotorwelle
- 36: doppelte Stirnradstufe
- 38: Stirnradstufe
- 40: Stirnradstufe
- 41: Stirnradstufe
- 42: Getriebegehäuse
- 101: erste Sonne
- 102: zweite Sonne
- 103: dritte Sonne
- 201: erstes Hohlrad
- 202: zweites Hohlrad
- 300: Steg
- 310: erste Planeten
- 311: fünfte Planeten
- 312: zweite Planeten
- 320: vierte Planeten
- 321: dritte Planeten
- S1: erstes Schaltelement
- S2: zweites Schaltelement
- S3: drittes Schaltelement

## Patentansprüche

1. Getriebeanordnung für ein Hybrid-Kraftfahrzeug, umfassend
- eine Verbrennungsmotor-Eingangswelle (1) zur Verbindung der Getriebeanordnung (10, 10') mit einer Verbrennungskraftmaschine (20) des Kraftfahrzeugs,
- eine Elektromotor-Eingangswelle (2) zur Verbindung der Getriebeanordnung (10, 10') mit einer elektrische Maschine (30) des Kraftfahrzeugs,
- eine Ausgangswelle (3) zur Verbindung der Getriebeanordnung (10, 10') mit einem Abtrieb des Kraftfahrzeugs,
- einen in einem Gehäuse (42) angeordneten Planetensatz mit einer ersten Sonne (101), einer zweiten Sonne (102), einem ersten Hohlrad (201) und einem Steg (300), auf dem ein Satz erster Planeten (310) und ein Satz zweiter Planeten (312) drehbar gelagert sind, wobei die ersten Planeten (310) einerseits mit dem ersten Hohlrad (201) und andererseits mit den zweiten Planeten (312) kämmen, die zweiten Planeten (312) mit der zweiten Sonne (102) kämmen und die erste Sonne (101) über einen Zahneingriffsmechanismus drehmomentübertragend mit den ersten Planeten (310) verbunden ist, sowie
- eine Mehrzahl von Schaltelementen (S1, S2, S3), mittels derer Elemente des Planetensatzes untereinander oder mit dem Gehäuse (42) schaltbar gekoppelt sind,
wobei auf dem Steg (300) ein Satz dritter Planeten (321) und ein Satz vierter Planeten (320) drehbar gelagert sind, wobei die dritten Planeten (321) einerseits mit einer dritten Sonne (103) und andererseits mit den vierten Planeten (320) und die vierten Planeten (320) ihrerseits mit einem zweiten Hohlrad (202) kämmen,
**dadurch gekennzeichnet, dass**
jedes der beiden Hohlräder (201, 202) über einen eigenen Zahneingriffsmechanismus (38, 40) drehmomentübertragend mit der Ausgangswelle (3) verbunden ist.

2. Getriebeanordnung nach Anspruch 1,
**dadurch gekennzeichnet,**
**dass** die Zahneingriffsmechanismen (38, 40), mit denen die beiden Hohlräder (201, 202) drehmomentübertragend mit der Ausgangswelle (3) verbunden sind, unterschiedliche Übersetzungen aufweisen.

3. Getriebeanordnung nach einem der vorangehenden Ansprüche,
**dadurch gekennzeichnet,**
**dass** mittels eines ersten Schaltelementes (S1) der Steg (300) schaltbar mit der Verbrennungsmotor-Eingangswelle (1) gekoppelt ist.

4. Getriebeanordnung nach einem der vorangehenden Ansprüche,
**dadurch gekennzeichnet,**
**dass** auf dem Steg (300) ein Satz fünfter Planeten (311) drehbar gelagert ist, die einerseits mit der ersten Sonne (101) und andererseits mit den ersten Planeten (310) kämmen.

5. Getriebeanordnung nach einem der vorangehenden Ansprüche,
**dadurch gekennzeichnet,**
**dass** mittels eines zweiten Schaltelementes (S2) die Elektromotor-Eingangswelle (2) derart schaltbar mit dem Steg (300), der dritten Sonne (103) und der zweiten Sonne (102) gekoppelt ist, dass wahlweise der Steg (300), die erste Sonne (101), die zweite Sonne (102) oder keines der besagten Elemente drehfest an die Elektromotor-Eingangswelle (2) ankoppelbar ist.

6. Getriebeanordnung nach Anspruch 5,
**dadurch gekennzeichnet,**
**dass** mittels des zweiten Schaltelementes (S2) die dritte Sonne (103) und die zweite Sonne (102) schaltbar mit dem Gehäuse (42) gekoppelt sind, dass wahlweise die erste Sonne (101), die zweite Sonne (102) oder keines der besagten Elemente an dem Gehäuse (42) festlegbar sind.

7. Getriebeanordnung nach einem der vorangehenden Ansprüche,
**dadurch gekennzeichnet,**
**dass** mittels eines dritten Schaltelementes (S3) die erste Sonne (101) derart schaltbar mit dem Steg (300) und dem Gehäuse (42) gekoppelt ist, dass die erste Sonne (101) wahlweise drehfest an den Steg (300) oder das Gehäuse (42) oder keines der beiden Elemente ankoppelbar ist.

8. Getriebeanordnung nach einem der Ansprüche 1 bis 3,
**dadurch gekennzeichnet,**
**dass** die erste Sonne (101) direkt mit den ersten Planeten (310) kämmt.

9. Getriebeanordnung nach dem Anspruch 8, soweit rückbezogen auf den Anspruch 3,
**dadurch gekennzeichnet,**
**dass** mittels des ersten Schaltelementes (S1) die dritte Sonne (103) mit dem Steg (300) und mit der Verbrennungsmotor-Eingangswelle (1) schaltbar gekoppelt ist.

10. Getriebeanordnung nach dem Anspruch 9,
**dadurch gekennzeichnet,**
**dass** mittels eines zweiten Schaltelementes (S2) die Elektromotor-Eingangswelle (2) derart schaltbar mit der ersten Sonne (101), der zweiten Sonne (102) und der dritten Sonne (103) gekoppelt ist, dass wahlweise die erste Sonne (101), die zweite Sonne (102), die dritte Sonne (103) oder keines der besagten Elemente drehfest an die Elektromotor-Eingangswelle (2) ankoppelbar ist.

11. Getriebeanordnung nach Anspruch 10,
**dadurch gekennzeichnet,**
**dass** mittels des zweiten Schaltelementes (S2) die zweite Sonne (102) und die dritte Sonne (103) schaltbar mit dem Gehäuse (42) gekoppelt sind, dass wahlweise die zweite Sonne (102), die dritte Sonne (103) oder keines der besagten Elemente an dem Gehäuse (42) festlegbar sind.

12. Getriebeanordnung nach einem der Ansprüche 8 bis 11,
**dadurch gekennzeichnet,**
**dass** mittels eines dritten Schaltelementes (S3) die erste Sonne (101) schaltbar an dem Gehäuse (42) festlegbar ist.

13. Getriebeanordnung nach Anspruch 6 oder 11,
**dadurch gekennzeichnet,**
**dass** das zweite Schaltelement (S2) derart ausgebildet ist, dass die jeweils drehfest an die Elektromotor-Eingangswelle (2) angekoppelte Sonne (101, 102, 103) nicht am Gehäuse (42) festgelegt ist.

14. Getriebeanordnung nach einem der vorangehenden Ansprüche,
**dadurch gekennzeichnet,**
**dass** wenigstens eines der Schaltelemente (S1, S2, S3) als formschlüssiges Schaltelement ausgebildet ist.

15. Hybrid-Kraftfahrzeug mit einer Verbrennungskraftmaschine (20), einer elektrischen Maschine (30) und einer Getriebeanordnung (10, 10'), mittels derer die Verbrennungskraftmaschine (20) und die elektrische Maschine (30) mit einem Abtrieb des Kraftfahrzeugs gekoppelt sind,
**dadurch gekennzeichnet,**
**dass** die Getriebeanordnung (10, 10') als eine Getriebeanordnung (10, 10') nach einem der vorangehenden Ansprüche ausgebildet ist, deren Verbrennungsmotor-Eingangswelle (1) mit der Verbrennungskraftmaschine (20), deren Elektromotor-Eingangswelle (2) mit der elektrischen Maschine (30) und deren Ausgangswelle (3) mit dem Abtrieb verbunden ist.

## Claims

1. Transmission arrangement for a hybrid vehicle, comprising
- an internal combustion engine input shaft (1) for connecting the transmission arrangement (10, 10') to an internal combustion engine (20) of the motor vehicle,
- an electric motor input shaft (2) for connecting the transmission arrangement (10, 10') to an electric machine (30) of the motor vehicle,
- an output shaft (3) for connecting the transmission arrangement (10, 10') to an output of the motor vehicle,
- a planetary set which is arranged in a housing (42) with a first sun (101), a second sun (102), a first internal gear (201) and a spider (300), on which a set of first planets (310) and a set of second planets (312) are mounted rotatably, the first planets (310) meshing firstly with the first internal gear (201) and secondly with the second planets (312), the second planets (312) meshing with the second sun (102), and the first sun (101) being connected in a torque-transmitting manner to the first planets (310) via a tooth engagement mechanism, and
- a plurality of switching elements (S1, S2, S3), by means of which elements of the planetary set are coupled switchably among one another or to the housing (42),
a set of third planets (321) and a set of fourth planets (320) being mounted rotatably on the spider (300), the third planets (321) meshing firstly with a third sun (103) and secondly to the fourth planets (320), and the fourth planets (320) meshing for their part with a second internal gear (202),
**characterized in that**
each of the two internal gears (201, 202) is connected in a torque-transmitting manner to the output shaft (3) via a dedicated tooth engagement mechanism (38, 40).

2. Transmission arrangement according to Claim 1,
**characterized**
**in that** the tooth engagement mechanism (38, 40), by way of which the two internal gears (201, 202) are connected in a torque-transmitting manner to the output shaft (3), have different transmission ratios.

3. Transmission arrangement according to either of the preceding claims,
**characterized**
**in that** the spider (300) is coupled switchably to the internal combustion engine input shaft (1) by means of a first switching element (S1).

4. Transmission arrangement according to one of the preceding claims,
**characterized**
**in that** a set of fifth planets (311) is mounted rotatably on the spider (300), which fifth planets (311) mesh firstly with the first sun (101) and secondly with the first planets (310).

5. Transmission arrangement according to one of the preceding claims,
**characterized**
**in that** the electric motor input shaft (2) is coupled switchably to the spider (300), the third sun (103) and the second sun (102) by means of a second switching element (S2) in such a way that selectively the spider (300), the first sun (101), the second sun (102) or none of the said elements can be coupled fixedly to the electric motor input shaft (2) so as to rotate with it.

6. Transmission arrangement according to Claim 5,
**characterized**
**in that** the third sun (103) and the second sun (102) are coupled switchably to the housing (42) by means of the second switching element (S2), and in that selectively the first sun (101), the second sun (102) or none of the said elements can be fixed on the housing (42).

7. Transmission arrangement according to one of the preceding claims,
**characterized**
**in that** the first sun is coupled switchably to the spider (300) and the housing (42) by means of a third switching element (S3) in such a way that the first sun (101) can selectively be coupled fixedly to the spider (300) or the housing (42) or neither of the two elements so as to rotate with it.

8. Transmission arrangement according to one of Claims 1 to 3,
**characterized**
**in that** the first sun (101) meshes directly with the first planets (310).

9. Transmission arrangement according to Claim 8, insofar as it refers back to Claim 3,
**characterized**
**in that** the third sun (103) is coupled switchably to the spider (300) and to the internal combustion engine input shaft (1) by means of the first switching element (S1).

10. Transmission arrangement according to Claim 9,
**characterized**
**in that** the electric motor input shaft (2) is coupled switchably to the first sun (101), the second sun (102) and the third sun (103) by means of a second switching element (S2) in such a way that selectively the first sun (101), the second sun (102), the third sun (103) or none of the said elements can be coupled fixedly to the electric motor input shaft (2) so as to rotate with it.

11. Transmission arrangement according to Claim 10,
**characterized**
**in that** the second sun (102) and the third sun (103) are coupled switchably to the housing (42) by means of the second switching element (S2), and in that selectively the second sun (102), the third sun (103) or none of the said elements can be fixed on the housing (42).

12. Transmission arrangement according to one of Claims 8 to 11,
**characterized**
**in that** the first sun (101) can be fixed switchably on the housing (42) by means of a third switching element (S3) .

13. Transmission arrangement according to Claim 6 or 11,
**characterized**
**in that** the second switching element (S2) is configured in such a way that the sun (101, 102, 103) which is coupled in each case fixedly to the electric motor input shaft (2) so as to rotate with it is not fixed on the housing (42).

14. Transmission arrangement according to one of the preceding claims,
**characterized**
**in that** at least one of the switching elements (S1, S2, S3) is configured as a positively locking switching element.

15. Hybrid motor vehicle having an internal combustion engine (20), an electric machine (30) and a transmission arrangement (10, 10'), by means of which the internal combustion engine (20) and the electric machine (30) are coupled to an output of the motor vehicle,
**characterized**
**in that** the transmission arrangement (10, 10') is configured as a transmission arrangement (10, 10') according to one of the preceding claims, the internal combustion engine input shaft (1) of which is connected to the internal combustion engine (20), the electric motor input shaft (2) of which is connected to the electric machine (30), and the output shaft (3) of which is connected to the output.

## Revendications

1. Ensemble de transmission pour un véhicule automobile hybride, comprenant
- un arbre d'entrée de moteur à combustion (1) pour relier l'ensemble de transmission (10, 10') à un moteur à combustion interne (20) du véhicule,
- un arbre d'entrée de moteur électrique (2) pour relier l'ensemble de transmission (10, 10') à une machine électrique (30) du véhicule automobile,
- un arbre de sortie (3) pour relier l'ensemble de transmission (10, 10') à une prise de force du véhicule automobile,
- un train planétaire disposé dans un boîtier (42) avec une première roue solaire (101), une deuxième roue solaire (102), une première couronne dentée (201) et un porte-satellites (300) sur lequel sont supportés de manière rotative un jeu de premiers satellites (310) et un jeu de deuxièmes satellites (312), les premiers satellites (310) s'engrenant d'une part avec la première couronne dentée (201) et d'autre part avec les deuxièmes satellites (312), les deuxièmes satellites (312) s'engrenant avec la deuxième roue solaire (102) et la première roue solaire (101) étant connectée aux premiers satellites (310) par transmission de couple par le biais d'un mécanisme d'engrènement, et
- une pluralité d'éléments de commutation (S1, S2, S3), au moyen desquels des éléments du train planétaire sont accouplés de manière commutable les uns aux autres ou au boîtier (42),
un jeu de troisièmes satellites (321) et un jeu de quatrièmes satellites (320) étant supportés de manière rotative sur le porte-satellites (300), les troisièmes satellites (321) s'engrenant d'une part avec une troisième roue solaire (103) et d'autre part avec les quatrièmes satellites (320) et les quatrièmes satellites (320) s'engrenant pour leur part avec une deuxième couronne dentée (202),
**caractérisé en ce que**
chacune des deux couronnes dentées (201, 202) est connectée à l'arbre de sortie (3) par transmission de couple par le biais d'un mécanisme d'entraînement propre (38, 40).

2. Ensemble de transmission selon la revendication 1,
**caractérisé en ce que**
les mécanismes d'engrènement (38, 40) avec lesquels les deux couronnes dentées (201, 202) sont connectées à l'arbre de sortie (3) par transmission de couple présentent des démultiplications différentes.

3. Ensemble de transmission selon l'une quelconque des revendications précédentes,
**caractérisé en ce que**
le porte-satellites (300) est accouplé de manière commutable à l'arbre d'entrée de moteur à combustion (1) au moyen d'un premier élément de commutation (S1).

4. Ensemble de transmission selon l'une quelconque des revendications précédentes,
**caractérisé en ce**
**qu'**un jeu de cinquièmes satellites (311) est supporté de manière rotative sur le porte-satellites (300), lesquels cinquièmes satellites s'engrènent d'une part avec la première roue solaire (101) et d'autre part avec les premiers satellites (310).

5. Ensemble de transmission selon l'une quelconque des revendications précédentes,
**caractérisé en ce que**
l'arbre d'entrée de moteur électrique (2) est accouplé de manière commutable au moyen d'un deuxième élément de commutation (S2) avec le porte-satellites (300), la troisième roue solaire (103) et la deuxième solaire (102), **en ce que**, de manière sélective, le porte-satellites (300), la première roue solaire (101), la deuxième roue solaire (102) ou aucun desdits éléments peuvent être accouplés de manière solidaire en rotation à l'arbre d'entrée de moteur électrique (2).

6. Ensemble de transmission selon la revendication 5,
**caractérisé en ce que**
la troisième roue solaire (103) et la deuxième roue solaire (102) sont accouplées de manière commutable au boîtier (42) au moyen du deuxième élément de commutation (S2), et **en ce que**, de manière sélective, la première roue solaire (101), la deuxième roue solaire (102) ou aucun desdits éléments peuvent être fixés au boîtier (42).

7. Ensemble de transmission selon l'une quelconque des revendications précédentes,
**caractérisé en ce que**
la première roue solaire (101) est accouplée de manière commutable au porte-satellites (300) et au boîtier (42) au moyen d'un troisième élément de commutation (S3), de telle sorte que la première roue solaire (101) peut être accouplée de manière solidaire en rotation au porte-satellites (300) ou au boîtier (42) ou à aucun de ces deux éléments.

8. Ensemble de transmission selon l'une quelconque des revendications 1 à 3,
**caractérisé en ce que**
la première roue solaire (101) s'engrène directement avec les premiers satellites (310).

9. Ensemble de transmission selon la revendication 8, dans la mesure où elle se rapporte à la revendication 3,
**caractérisé en ce que**
la troisième roue solaire (103) est accouplée de manière commutable au porte-satellites (300) et à l'arbre d'entrée de moteur à combustion (1) au moyen du premier élément de commutation (S1).

10. Ensemble de transmission selon la revendication 9,
**caractérisé en ce que**
l'arbre d'entrée de moteur électrique (2) est accouplé de manière commutable à la première roue solaire (101), la deuxième roue solaire (102) et la troisième roue solaire (103) au moyen d'un deuxième élément de commutation (S2), de telle sorte que la première roue solaire (101), la deuxième roue solaire (102), la troisième roue solaire (103) ou aucun desdits éléments puissent, de manière sélective, être accouplés de manière solidaire en rotation à l'arbre d'entrée de moteur électrique (2).

11. Ensemble de transmissions selon la revendication 10,
**caractérisé en ce que**
la deuxième roue solaire (102) et la troisième roue solaire (103) sont accouplées de manière commutable avec le boîtier (42) au moyen du deuxième élément de commutation (S2), et **en ce que**, de manière sélective, la deuxième roue solaire (102), la troisième roue solaire (103) ou aucun desdits éléments peuvent être fixés au boîtier (42).

12. Ensemble de transmission selon l'une quelconque des revendications 8 à 11,
**caractérisé en ce que**
la première roue solaire (101) peut être fixée de manière commutable au boîtier (42) au moyen d'un troisième élément de commutation (S3).

13. Ensemble de transmission selon la revendication 6 ou 11,
**caractérisé en ce que**
le deuxième élément de commutation (S2) est réalisé de telle sorte que la roue solaire (101, 102, 103) accouplée à chaque fois de manière solidaire en rotation à l'arbre d'entrée de moteur électrique (2) ne soit pas fixée au boîtier (42).

14. Ensemble de transmission selon l'une quelconque des revendications précédentes,
**caractérisé en ce**
**qu'**au moins l'un des éléments de commutation (S1, S2, S3) est réalisé sous forme d'élément de commutation par engagement par correspondance de formes.

15. Véhicule automobile hybride comprenant un moteur à combustion interne (20), une machine électrique (30) et un ensemble de transmission (10, 10'), au moyen desquels le moteur à combustion interne (20) et la machine électrique (30) sont accouplés à une prise de force du véhicule automobile,
**caractérisé en ce que**
l'ensemble de transmission (10, 10') est réalisé sous forme d'ensemble de transmission (10, 10') selon l'une quelconque des revendications précédentes, dont l'arbre d'entrée de moteur à combustion (1) est connecté au moteur à combustion interne (20), dont l'arbre d'entrée de moteur électrique (2) est connecté à la machine électrique (30) et dont l'arbre de sortie (3) est connecté à la prise de force.
